# EUROPEAN PATENT APPLICATION

(11) **EP 1 198 057 A2**
(43) Date of publication of application: **17.04.2002**
(21) Application number: 01308601.2
(22) Date of filing: 09.10.2001
(51) Int. Cl.: H02M 3/158

(54) **A power supply**

(30) Priority: 10.10.2000 GB 0024732
(71) Applicant: Lucas Industries Limited, West Midlands B90 4LA (GB)
(72) Inventor: Deller, Nigel, Cirencester, Gloucestershire GL7 6HR (GB)
(74) Representative: Spall, Christopher John

(57) **Abstract**

A power supply circuit that can operate for input voltages above or below a predetermined output voltage. The circuit comprises input (1) and output nodes (2), to which input voltages are applied and output voltages produced respectively, an inductor (13) adapted to store electrical energy, an input switching stage which in a first state applies a first voltage and in a second state a second, lower, voltage to the input side (4) of the inductor (13), an output switching stage adapted to have a first state which connects the output (5) of the inductor (13) to a third voltage permitting current from the inductor (13) to flow to the output node (2) and control means (17) to control the state of the two switching stages such that the voltage of the output node (2) at the predetermined value.

## Description

This invention relates to improvements in electrical power supplies, especially but not exclusively for producing a DC output supply voltage for an automotive system from an unregulated battery supply.

Generally automotive electronic circuits operate from either a 12 volt or 24 volt nominal battery supply. As electronic systems on the vehicle become more sophisticated it is increasingly important to ensure that the supply voltage fed to these circuits is tightly controlled within predetermined limits. This is usually achieved by providing a power supply provided between the battery and the circuits. The power supply takes the battery voltage as its input voltage and provides a regulated output voltage for onwards transmission to the electronic circuits in the vehicle.

The key problem in the design of a power supply for a vehicle is that the voltage from the battery may vary in use over a wide range of voltages. These variations are due to temporary high loads. For example, operation of the engine starter motor may cause the battery voltage to drop below 5 volts whilst the removal of an inductive load may cause the voltage to rise to above 100 volts.

For systems that are required to operate continuously through all these conditions without disturbance the power supply must be capable of accommodating all of these variations in battery voltage whilst maintaining a steady regulated output voltage. This output voltage must be maintained for battery voltages that are both above and below the supply voltage.

There are a number of well-known power supply topologies that provide a regulated output voltage from a varying supply voltage. These circuits include switch mode circuits in which a switch is alternately opened and closed to control the build up of current stored in an inductor as a way of controlling the output voltage. Several of these topologies only operate satisfactorily in one mode. The "buck type or step-down" circuit will produce a steady output voltage that is lower than the input voltage but will not work if the input voltage is lower than the desired output voltage. The "step-up type or boost" circuit will produce a regulated output voltage that exceeds the input voltage but will not work if the input voltage exceeds the desired output voltage, unless an expensive isolating transformer is employed as the inductive element.

Other circuits have been proposed that will function in both modes, i.e. with input voltages that are both above and below the desired output voltage. These have suffered from the disadvantage that a large number of discrete components are needed and, in particular, complex and expensive reactive components.

It is an object of the invention to provide a power supply circuit that can operate for input voltages that are above or below the desired output voltage whilst using only a limited number of discrete components.

According to a first aspect the invention provides a power supply circuit adapted to provide a predetermined output voltage from an input voltage, the circuit comprising:
an input node to which the input voltage is applied;
an output node at which the output voltage is produced;
an inductor adapted to store electrical energy;
an input switching stage which in a first state applies a first voltage dependent upon the voltage at the input node to an input side of the inductor and in a second state applies a second, lower, voltage, such as ground, to the input side of the inductor,
an output switching stage adapted in a first state to connect the output side of the inductor to a third voltage, and in a second state to permit current from the inductor to flow to the output node; and
a control means adapted to control the state of the two switching stages thereby to control the flow of current through the inductor to maintain the output node at the predetermined output voltage over a range of values of the input voltage.

Preferably, the third voltage is lower than the input voltage. It may conveniently comprise ground or earth, although it may be any suitable voltage that is lower than the input voltage.

The power supply may maintain the output voltage at the predetermined voltage for a range of input voltages both above and below the output voltage.

The inductor may conveniently comprise a single wound component.

By providing a circuit in which a single inductor is used to store charge with the flow of current within the inductor being controlled by switching stages upstream and downstream of the inductor a simple low cost solution to the problem of widely varying input voltages is provided. In prior art circuits only switching upstream or downstream of the inductor is provided.

A smoothing capacitor may be provided which is connected between the output node and an earth to smooth the voltage ripple that may otherwise be present at the output node. A substantially steady regulated output voltage can be produced in this way.

The output switching stage may prevent current flowing from the inductor to the output node when in its first state by connecting the output of the inductor to a fixed voltage, such as to ground potential when in the first state.

The input switching circuit may define a "boost type" circuit comprising a first switch, such as a transistor, connected in series between a first side (hereinafter referred to as the input side) of the inductor and the input node and a diode connecting the input side of the inductor to the low voltage point (such as ground). The transistor may be of any one of a number of types, such as a bi-polar transistor or a field effect transistor. Of course, it is envisaged that other forms of switch may also be employed.

The output switching circuit may comprise a "step-up or boost type" circuit comprising a switch, such as a transistor, connected between a second side (hereinafter referred to as the output side) of the inductor and an earth point and a diode connected in series between the output side of the inductor and the output node. The switch may be operable to present a low resistance path from the inductor to earth or a high resistance path.

The control means may be adapted to apply a first pulse-width modulated waveform to the switch of the first switching stage whereby the switch is alternately switched fully ON (first state) and fully OFF (second state). The pulse-width modulated signal may have a mark-space ratio dependent upon a measured value of the output voltage. Of course, other forms of modulation could be employed to control the output voltage.

The control means may be further adapted to apply a second pulse-width modulated waveform to the output switching circuit whereby the switch of the output stage is alternately switched fully ON (first condition) and fully OFF (second condition). This may have a fixed mark-space ratio that is independent of the measured output voltage. It may have a fixed duty cycle.

The control means may apply the modulating signals to the base, or to the gate, of each of the transistors of the switching circuits.

The first and second waveforms may be synchronised such that the input switch turns on to connect the input of the inductor to the input node at the same time as the output switch is switched on to connect the output of the inductor to earth, or substantially earth plus a voltage drop across the switch.

Of course, in a modification there may be a phase difference between the first and second waveforms, for example one may slightly lead the other.

When the input voltage exceeds the predetermined output voltage the control means may be adapted to maintain the switch of the output switching stage in its second condition, i.e. permanently switched OFF. In this condition the circuit functions as a simple "step-down type circuit" with the current in the inductor being free to flow out to the output node and the smoothing capacitor.

When the input voltage falls below the output voltage the control means may be adapted to apply a pulse-width modulated control signal to the output stage.

In both cases the precise output voltage is controlled by varying the mark-space ratio of the signal driving the input switch dependent upon a measured value of the output voltage. Generally, for decreasing input voltages the duty cycle may be increased so that the inductor is connected to the input voltage for a longer duration in each cycle. For higher voltages, the duty cycle is decreased.

The input voltage may be supplied by a battery, and may be nominally 12 volts or 24 volts. A wide range of possible output voltages may be produced, but in a convenient arrangement a 12 volt or 24 volt output voltage may be provided. In one convenient arrangement, the circuit can be used to provide a 7 volt supply which may be "post-regulated" by one or more linear regulators.

Of course, it will be understood that the invention as described is suitable for use predominantly in regulating a positive input voltage to produce a positive output voltage. For producing negative output voltages from negative input voltages, the values of the second and third voltages may be varied.

In accordance with a second aspect the invention provides a vehicle which includes a battery and one or more electrical circuits which draw power from the battery through a power supply in accordance with the first aspect of the invention, the input node of the power supply being fed from a DC rail connected to the battery and the output voltage of the power supply being fed to the or each electrical circuit through a DC supply rail.

There will now be described, by way of example only, one embodiment of the present invention with reference to the accompanying drawings of which:
**Figure 1** is a circuit diagram of a power supply in accordance with the present invention;
**Figure 2** is a circuit diagram of an equivalent circuit for the circuit of Figure 1 when the input voltage exceeds the output voltage; and
**Figure 3** is a circuit diagram of an equivalent circuit for the circuit of Figure 1 when the input voltage is less than the output voltage.

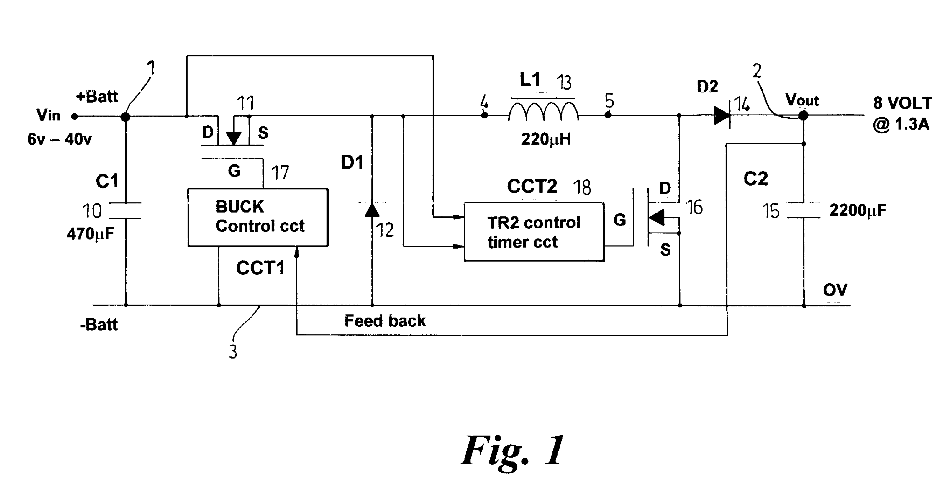

A power supply in accordance with the present invention is illustrated in Figure 1 of the accompanying drawings.

An inductor L1, in this example a wound component, is provided in series between an input node 1 and an output node 2. An earth rail 3 is also provided which is connected to the negative terminal of a 12 volt car battery (not shown) and the positive terminal of the battery is connected to the input node 1. The power supply produces an output voltage at the output node 2 which is connected to a power supply rail for onward connection to the vehicle's electrical circuitry. The output voltage produced at the output node 2 is set nominally at 12 volts DC as measured between the output node 2 and the earth rail 3.

To smooth out any sudden peaks and troughs in the battery voltage a capacitor C1 is connected between the input node 1 and the earth rail 3. Of course, this smoothing capacitor C1 could be omitted in some instances. Similarly, an output smoothing capacitor C2 is connected between the output node 2 and the earth rail 3. This acts to smooth the output voltage and the value of the capacitor C2 will be varied depending upon the system requirements. Generally a larger output capacitor C2 provides a smoother output at higher cost and bulk.

An input switching stage is provided which electrically connects the input node 1 to an input side 4 of the inductor L1. This comprises a transistor Q1 which is connected in series to provide a current path through its drain and source between the input node 1 and the inductor L1. A diode D1 connects the input side 4 of the inductor to the earth rail 3 with the cathode of the diode connected to the input node. The transistor Q1 is operable between a fully switched ON state (transistor saturated) and a fully switched OFF state by application of a first control voltage waveform to its gate. When the transistor Q1 is ON the input voltage is applied to the input side 4 of the inductor L1 and the diode D1 is reverse biased to prevent current flowing through the diode D1 to earth. When switched OFF the input voltage is isolated from the input side 4 of the inductor L1 permitting (as will become apparent) current to be drawn by the inductor through the diode D1 from the earth rail 3.

An output switching stage is connected between an output side 5 of the inductor L1 and the output node 2. This comprises a second transistor Q2 that is connected in series between the output side 5 of the inductor L1 and the earth rail 3 to provide a current path through its drain and source from the inductor L1 to earth. A second diode D2 connects the output side 5 of the inductor to the output node 2 with the anode of the diode connected to the output side 5 of the inductor L1. The transistor Q2 is operable between a fully switched ON state (transistor saturated) and a fully switched OFF state by application of a second control voltage waveform to its gate. When the transistor Q2 is ON a low resistance conduction path is provided between the output side 5 of the inductor L1 and the earth rail 3. When switched OFF the connection to the earth rail 3 is effectively broken and the current from the inductor L1 is allowed to flow through the diode D2 to the output node 2 and the smoothing capacitor C2.

The level of the output voltage at the output node is set by controlling the amount of current drawn through the inductor L1 and the passage of this current to the smoothing capacitor C2 and hence the load. This is achieved by modulating the two transistors Q1 and Q2 using the two control signals.

The control signal applied to the gate of the first transistor Q1 comprises a pulse-width modulated waveform comprising alternating ON and OFF periods. The amount of current that can be drawn by the inductor L1 from the input node 1 is determined by the duty cycle of the signal. This is the ratio of the time for which the switch is ON compared to the time for which the switch is OFF within each cycle and as such corresponds to the mark-space ratio of the signal. The duty cycle is set by the first controller in response to an input signal voltage fed back from the output node and indicative of the output voltage. The input signal is derived by feeding the measured output node voltage to a comparator (nct shown) along with a reference voltage. The comparator produces an output signal dependent upon the difference between the measured and reference voltages and the duty cycle is increased or decreased according to the value of the output of the comparator.

The second transistor is similarly controlled by a control signal applied to its gate comprising either periodically alternating ON periods and OFF periods or a continuous OFF period depending upon the magnitude of the input voltage. A second controller is provided which generates one of the two waveforms in response to two inputs: a first input is dependent upon the input voltage and a second input is dependent upon the voltage present at the input side of the inductor L1.

Operation of the circuit for different values of the input voltage is as follows:

### Input voltage exceeds output voltage

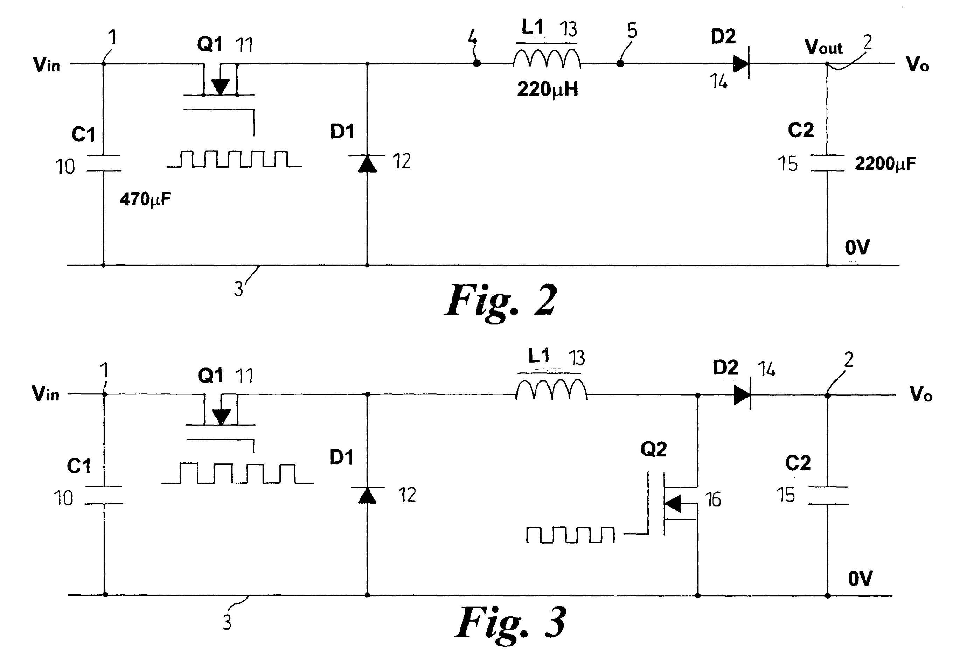

If the input voltage exceeds the regulated output voltage the second controller forces the second transistor Q2 to remain constantly OFF whilst the first controller varies the duty cycle of the signal applied to the first transistor to regulate the output voltage. This is shown in Figure 2 of the accompanying drawings. When the transistor Q1 is switched on during a cycle the full input voltage is applied to the input side 4 of the inductor. The current in the inductor increases storing energy in its magnetic field. When the switch is turned OFF the inductor continues to draw current from the earth rail through diode D1. At all times the inductor current flows on to the output node transferring the stored energy to the output capacitor C2 which smoothes the output load by carrying the load between ON pulses.

For decreasing input voltages the duty cycle is increased so that the inductor is connected to the full input voltage for a longer duration in each cycle. For higher voltages the duty cycle is decreased.

### Input voltage equals or is less than the output voltage

As the input voltage approaches the desired regulated output voltage level the second controller activates the second transistor by applying a waveform of fixed duty cycle to its base. The second transistor therefore is alternately switched ON and OFF within each cycle. A variable duty pulse-width modulated waveform is applied to the first transistor Q1 as in the case where the input voltage exceeds the output voltage. Importantly, the two waveforms are synchronised so that both transistors turn ON at substantially the same time. This synchronisation is achieved by the second controller which acts upon the timing signal obtained by monitoring the voltage at the input side of the inductor L1. This is shown in Figure 3 of the accompanying drawings.

The output voltage is still regulated by varying the duty cycle of the waveform applied to the first transistor. However, the output voltage can now exceed the input voltage. At the start of a cycle when both transistors Q1 and Q2 are ON the full input voltage appears across the inductor building up stored energy. When the second transistor Q2 turns OFF the energy stored in the inductor is passed on to the output smoothing capacitor and the load via D2. If transistor Q1 is still on at this stage current is also drawn from the input node. If Q1 is switched off energy is transferred purely from the inductor to the output via D1 and D2.

Generally, for very low input voltages (i.e. considerably less than the output voltage) the first switch will turn off after the second switch. As the input voltage is further increased towards the output voltage the duty cycle is decreased and the first transistor Q1 switches off before the second transistor.

The following components and component values may be employed within the scope of the invention:
Q1 - National Semiconductors LM2576ADJ
Q2 - IRLL014N or similar n-channel FET
Q1 - control circuit = LM2567ADJ
Q2 - control circuit = 12µs motostable timer implemented using 74HC4538 timer,
PWM frequency controlled by LM2576 @ 52KHz
C1 = 470µF, 63 volt
C2 = 2200µF, 16 volt
L1 = 220µH, 4A
Input voltage range = 6v - 40 volt nominal
Output voltage = 8 volt @ 1.3 Amp nominal

It will of course be understood that the invention is suitable for use in automobile applications but may also find use in a wide range of other applications where it is required to produce a regulated output voltage from an input voltage that may be either above or below the output voltage and which may vary over time.

## Claims

1. A power supply circuit adapted to provide a predetermined output voltage from an input voltage, the circuit comprising:
a) an input node (1) to which the input voltage is applied;
b) an output node (2) at which the output voltage is produced;
c) an inductor (13) adapted to store electrical energy;
d) an input switching stage which in a first state applies a first voltage dependent upon the voltage at the input node (1) to an input side (4) of the inductor (13) and in a second state applies a second, lower, voltage to the input side (4) of the inductor (13);
e) an output switching stage adapted in a first state to connect the output side (5) of the inductor (13) to a third voltage and in a second state to permit current from the inductor (13) to flow to the output node (2); and
f) a control means (17) adapted to control the state of the two switching stages thereby to control the flow of current through the inductor (13) to maintain the output node (2) at the predetermined output voltage over a range of values of the input voltage.

2. A power supply circuit according to Claim 1, in which the third voltage is ground or earth.

3. A power supply circuit according to Claim 1 or 2 which maintains the output voltage at the predetermined voltage for a range of input voltages above and below the output voltage.

4. A power supply circuit according to any preceding claim in which the inductor (13) comprises a single wound component.

5. A power supply circuit according to any preceding claim in which there is further provided a smoothing capacitor (15) between the output node (2) and an earth (3).

6. A power supply circuit according to any preceding claim in which the output switching stage prevents current flowing from the inductor (13) to the output node (2) when in its first state by connecting the output of the inductor (13) to a fixed voltage when in its first state.

7. A power supply circuit according to any preceding claim in which the input switching circuit comprises a switch connected in series between the input side of the inductor (13) and the input node (1), and a diode (12) connecting the input side (4) of the inductor (13) to the low voltage point.

8. A power supply circuit according to Claim 7 in which the input switching circuit switch comprises a transistor (11).

9. A power supply circuit according to Claim 7 or 8 in which the control means (17) is adapted to apply a pulse-width modulated waveform to the switch of the first switching stage whereby the switch is alternately switched fully on and fully off.

10. A power supply circuit according to Claim 9 in which the pulse-width modulated waveform applied to the switch of the input switching section has a mark-space ratio dependent upon a measured value of the output voltage.

11. A power supply circuit according to any preceding claim in which the output switching circuit comprises a switch connected between the output side of the inductor (13) and an earth point (3), and a diode (14) connected in series between the output side (5) of the inductor (13) and the output node (2).

12. A power supply circuit according to Claim 11 in which the output switching section switch comprises a transistor (15).

13. A power supply circuit according to Claim 11 or 12 in which the output switching section switch is operable to provide a low resistance path from the inductor (13) to an earth (3) or a high resistance path.

14. A power supply circuit according to one of Claims 11, 12 or 13 in which the control means (17) is adapted to apply a pulse-width modulated waveform to the output switching circuit whereby the switch of the output switching section is alternatively switched fully cn and fully off.

15. A power supply circuit according to Claim 14 in which the mark-space ratio of the pulse-width modulated signal applied to the output stage is independent of a measured value of the output voltage.

16. A power supply circuit according to one of Claims 14 or 15 when independent from Claim 9 in which the pulse-modulated waveforms applied to the switch of the input section and to the output switching section are synchronised such that the input switch turns on to connect the input (4) of the inductor (13) to the input node (1) at the same time as the output switch is switched on to connect the output (5) of the inductor (13) to an earth (3) plus a voltage drop across the switch.

17. A power supply circuit account to Claim 16 in which the voltage drop is zero.

18. A power supply circuit according to any of Claims 14 to 17 in which, when the input voltage exceeds the predetermined output voltage, the control means (17) is adapted to maintain the switch of the output switching stage switched off.

19. A power supply circuit according to Claim 18 in which when the input voltage falls below the output voltage the control means (17) is adapted to apply a pulse-width modulated signal to the output stage.

20. A vehicle which includes a battery and one or more electrical circuits which draw power from the battery through a power supply according to any previous claim the input node (1) of the power supply being fed from a DC rail connected to the battery and the output voltage of the power supply being fed to the or each electrical circuit through a further DC rail.
